# EUROPÄISCHE PATENTSCHRIFT

(11) **EP 3 288 723 B1**
(45) Veröffentlichungstag und Bekanntmachung des Hinweises auf die Patenterteilung: **10.06.2020**
(21) Anmeldenummer: 16710943.8
(22) Anmeldetag: 11.03.2016
(51) Int. Cl.: B25J 15/00, B23P 19/00, B62D 25/24

(54) **ROBOTERWERKZEUG ZUM SETZEN VON STOPFEN**
ROBOT TOOL FOR SETTING SEALING PLUGS
OUTIL DE ROBOT POUR LA POSE DE BOUCHONS

(30) Priorität: 29.04.2015 DE 102015207848
(43) Veröffentlichungstag der Anmeldung: 07.03.2018
(73) Patentinhaber: Bayerische Motoren Werke Aktiengesellschaft, 80809 München (DE)
(72) Erfinder: BIX, Johannes, 88605 Messkirch (DE); KOSSMANN, Max, 80333 München (DE); SCHMIEDEL, Ingo, 85250 Altomünster / Asbach (DE)
(86) Internationale Anmeldenummer: PCT/EP2016/055217
(87) Internationale Veröffentlichungsnummer: WO 2016/173756

(56) Entgegenhaltungen:
- EP-A2- 2 366 506
- DE-A1- 2 144 359
- DE-A1-102010 005 798
- DE-A1-102010 010 718
- DE-A1-102014 004 046
- JP-A- H11 151 625
- JP-A- 2006 218 615
- US-A1- 2011 209 320

## Beschreibung

Die Erfindung betrifft ein Roboterwerkzeug zum Setzen von Stopfen in Öffnungen in einem Karosseriebauteil mit einer Setzeinrichtung. Ferner betrifft die Erfindung ein Verfahren zum Setzen von Stopfen in eine Öffnung in einem Karosseriebauteil unter Verwendung des Roboterwerkzeugs.

Damit bei Karosseriebauteilen nach dem Lackieren der flüssige Lack wieder schnell aus den Hohlräumen abfließen kann, werden diese mit zahlreichen, teilweise bis zu mehreren Hundert Öffnungen versehen. Auch zum Setzen von Schweißpunkten sind Löcher vorzusehen. Durch diese Öffnungen kann zudem Wachs in die Hohlräume eingespritzt werden, um das Karosseriebauteil zu versiegeln. Sämtliche Öffnungen müssen während der Montage wieder verschlossen werden, um das Eindringen von Feuchtigkeit bzw. Wasser zu verhindern und das Fahrzeug während des Betriebs vor Korrosion zu schützen. Die Öffnungen werden mit sogenannten Stopfen aus Hart-Kunststoff verschlossen, welche es in verschiedenen Durchmessern gibt. Die Stopfen werden von Mitarbeitern zumeist per Hand in die Öffnungen eingesetzt.

Diese Handhabung birgt verschiedene Nachteile. Für den die Stopfen setzenden Mitarbeiter ist die Arbeit unergonomisch, da er sich bücken und strecken muss, um die Stopfen zu setzen. Zudem kostet es einiges an Kraft den Stopfen in die jeweilige Öffnung zu drücken, was auf Dauer sehr anstrengend ist. Dies kann zu einer nachlassenden Konzentration und somit zu größerer Fehleranfälligkeit führen. Da je nach Fahrzeugmodell bis zu mehrere Hundert Stopfen zu setzen sind, werden diese über die ganze Produktion verteilt immer wieder, von verschiedenen Mitarbeitern an unterschiedlichen Stationen positioniert. Dies erfordert viele Handgriffe, die von unzähligen verschiedenen Mitarbeitern unter erheblicher Einarbeitungszeit gelernt werden müssen.

Durch die verschiedenen Durchmesser der Stopfen besteht die Möglichkeit, dass diese im Einzelfall falsch gesetzt werden. Es kann auch nicht ausgeschlossen werden, dass der jeweilige Stopfen zwar an der richtigen Stelle platziert, allerdings nicht mit genügend Kraft in die Karosse gedrückt wird und somit nicht vollständig abdichtet oder sogar während der Fahrt herausfällt. Auch können einzelne Stopfen schlicht vergessen werden. Dadurch kann Feuchtigkeit oder Wasser in die Karosserie eindringen und zu Korrosion führen.

Schließlich handelt es sich bei den Öffnungen um scharfkantige Löcher, an denen sich der Arbeiter beim Einsetzen der Stopfen verletzten könnte.

Es gibt auch robotergestützte Verfahren zum Einsetzen der Stopfen. Jedoch kann dabei an der Setzeinrichtung des Roboterwerkzeugs selbst immer nur ein Stopfen aufgenommen werden. Ferner muss sie nach dem Setzten jedes Stopfens zum Nachlademagazin zurückgefahren werden. Dadurch geht viel Zeit verloren.

Auch arbeitet das Roboterwerkzeug mit Vakuum bzw. Druckluft und benötigt neben dem Stromanschluss auch noch eine Luftversorgung. Druckluft im Allgemeinen ist in der Bereitstellung sehr energieintensiv. Ferner besteht durch die notwendige Verwendung von Druckluftschläuchen die Gefahr des Hängenbleibens bzw. Darüberstolperns, d. h. Verletzungsgefahr.

Auch nachteilig an den bisher verwendeten Roboterwerkzeugen ist, dass diese nicht MRK-gerecht (Mensch-Roboter Kooperation) sind. Die Roboterstation ist eingezäunt, so dass während des Stopfensetzens kein Mensch an dem Karosseriebauteil arbeiten kann. Ein MRK-gerechtes Werkzeug muss entsprechend für Leichtbauroboter mit einer Leistungs- und Kraftbeschränkung gemäß der Definition nach DIN ISO 10218 Teil 1 & Teil 2 gestaltet sein, um so einen kollaborierenden Betrieb nach TS-15066 zu ermöglichen. Wichtig ist hierbei, dass keine Gefahr von möglichen Aktoren des Werkzeugs ausgeht.

Auch ist nachteilig, dass der üblicherweise verwendete Vakuumkopf des Roboterwerkzeugs nicht auswechselbar ist. Somit kann immer nur ein bestimmter Stopfen mit dem zum Vakuumkopf passenden Durchmesser verwendet werden. Nach dem Setzen des Stopfens wird ferner auf den passenden Sitz vertraut, ohne eine Nachprüfung bereit zu stellen. Sollte der Stopfen nicht halten, kann, wie beschrieben, Feuchtigkeit eindringen.

Weiterer Stand der Technik auf diesem Gebiet ist beispielsweise aus den Dokumenten DE 10 2014 004 046 A1, DE 10 2010 010718 A1, DE 21 44 359 A1 und EP 2366 506 A2 bekannt.

Der Erfindung liegt deshalb die Aufgabe zugrunde, ein Roboterwerkzeug bereit zu stellen, mit dem Stopfen ohne ständiges Nachladen schnell und variabel gesetzt werden können und ein dauerhafter Sitz der Stopfen gewährleistet wird. Ferner ist es Aufgabe der Erfindung, ein Verfahren bereit zu stellen, mit dem die Stopfen durch das Roboterwerkzeug schneller und gesichert gegen Herausfallen gesetzt werden können.

Diese Aufgaben werden durch die Merkmalskombination der jeweiligen Ansprüche 1 und 7 gelöst.

Erfindungsgemäß wird ein Roboterwerkzeug zum Setzen von Stopfen in Öffnungen in einem Karosseriebauteil mit einer Setzeinrichtung bereit gestellt, an der ein Stopfenmagazin mit einer Vielzahl von aufgereihten Stopfen angeordnet ist, die mittels der Setzeinrichtung nachladefrei unmittelbar nacheinander in die jeweiligen Öffnungen des Karosseriebauteils setzbar sind, wobei an einem Auslass der Setzeinrichtung eine umlaufende elastische Lippe vorgesehen ist, welche die Stopfen in dem Stopfenmagazin hält und durch eine axiale Bewegung der Stopfen in axialer Richtung des Roboterwerkzeugs elastisch umbiegbar ist. Die Integration des Stopfenmagazins und der Setzeinrichtung ermöglicht es, eine Vielzahl von Stopfen nacheinander zu setzen, ohne dass die Setzeinrichtung immer wieder einen einzelnen Stopfen aufnehmen muss. Durch eine passgenaue Führung der Stopfen im Stopfenmagazin ist eine gerade und ideal geführte Ausschiebung gewährleistet. Die Integration der elastischen Lippe gewährleistet einen sicheren Verbau der Stopfen an der jeweiligen Öffnung und hält den jeweils nachfolgenden Stopfen im Stopfenmagazin zurück. Durch die Elastizität erfolgt keine mechanische Einwirkung auf den Stopfen selbst, so dass die Montage die vorab definierten und festgelegten Eigenschaften des Stopfens nicht beeinflusst.

Erfindungsgemäß ist vorgesehen, dass die elastische Lippe an der Setzeinrichtung zu einem axialen Außenrand der Setzeinrichtung axial beabstandet angeordnet ist. Der Abstand gewährleistet ein flächiges Anlegen der Setzeinrichtung an das mit dem Stopfen zu versehene Bauteil vor und nach dem Setzen des Stopfens. Erfindungsgemäß wird in einer bevorzugten Ausführung vorgesehen, dass die Stopfen jeweils einen nicht-elastischen Deckel aufweisen, wobei der im Stopfenmagazin vorderste Stopfen im Bereich der Setzeinrichtung durch die elastische Lippe gehalten ist. Die elastische Lippe umgreift den Deckel des Stopfens und fixiert ihn positionsgetreu im Stopfenmagazin. Die Tatsache, dass der Deckel nicht-elastisch ist, ermöglicht eine vordefinierte Form, die während der Montage unverändert bleibt.

Die elastische Lippe liegt an dem jeweiligen Deckel des vordersten Stopfens an und wird im Zuge der Ausschiebebewegung des Stopfens durch den Deckel umgebogen. Sobald der Stopfen an dem Bauteil gesetzt ist, klappt die elastische Lippe zurück in die Setzeinrichtung und hält den nachfolgenden Stopfen im Magazin. Während der Setzbewegung führt die elastische Lippe den Stopfen in axialer Setzrichtung und verhindert ein Verkanten oder schiefes Eindringen in die Öffnung des Bauteils.

In einer bevorzugten Ausführung der Erfindung ist ferner vorgesehen, dass das Roboterwerkzeug MRK-gerecht und die Setzeinrichtung nacheinander an die jeweiligen Öffnungen führbar ist, um die Stopfen zu setzen. Die Positionierung kann automatisch kamerabasiert oder durch beliebige andere aus dem Stand der Technik bekannte Verfahren (z.B. eine kraftgeregelte Positionierung des Roboters, Positionierung mittels Sensoren (kapazitiv, Nährungsschalter, Lichttaster usw.) erfolgen. Die Setzeinrichtung wird dabei an die Öffnung geführt, das Einsetzen des Stopfens erfolgt durch Maschinenkraft. Durch die MRKgerechte Gestaltung ist auch ermöglicht, dass neben dem Setzen von Stopfen gleichzeitig weitere Arbeiten an dem Karosseriebauteil verrichtet werden können und das Stopfensetzen in weitere Montageabläufe integrierbar ist.

Die Erfindung sieht in einem günstigen Ausführungsbeispiel ferner vor, dass die Stopfen aus dem in der Setzeinrichtung aufgenommenen Stopfenmagazin über einen elektrischen Spindelantrieb in vordefinierten Schritten, beispielsweise unter Verwendung eines Spindelmotors, ausschiebbar ist. Hierdurch ist ermöglicht, die Stopfen vor und während dem Setzvorgang exakt bezüglich der Eindringtiefe in die Öffnung zu positionieren. Auch kann eine Vorabposition (Preload) zum besseren Einführen der Stopfen in die Öffnung gewährleistet werden.

Erfindungsgemäß wird die Setzeinrichtung des Roboterwerkzeugs in einem Ausführungsbeispiel auswechselbar ausgeführt, so dass unterschiedliche Stopfen in entsprechend unterschiedliche Öffnungen setzbar sind. Karosserieabhängig und öffnungsabhängig können unterschiedliche Stopfengrößen und Stopfenausbildungen gesetzt werden.

Die Erfindung richtet sich ferner an ein Verfahren zum Setzen der Stopfen in der Öffnung im Karosseriebauteil unter Verwendung des oben beschriebenen Roboterwerkzeugs mit einem elektrischen Spindelantrieb und zeichnet sich dadurch aus, dass über den Spindelantrieb der Setzeinrichtung der zu setzende Stopfen zunächst über ein vorbestimmtes Maß aus dem Auslass der Setzeinrichtung herausgeschoben und der teilweise herausgeschobene Stopfen mittels der Setzeinrichtung in die zu verschließende Öffnung so eingesetzt wird, dass ein Teil des Stopfens die Öffnung haltend hintergreift, und schließlich der Stopfen aus der Setzeinrichtung ausgeschoben und die Setzeinrichtung abgezogen wird, wobei die elastische Lippe beim Ausschieben des Stopfens umgebogen wird und nach dem Ausschieben des Stopfens den nachfolgenden Stopfen des Stopfenmagazins zurückhält.. Günstig ist dabei ein Verfahrensschritt, wonach zum Einsetzen des Stopfens die Setzeinrichtung frei schwingend geschalten wird, so dass sich der Stopfen über die schwingende Bewegung der Setzeinrichtung und daran angeschlossenen Bauteile selbständig mittig zur zu verschließenden Öffnung positioniert. Dabei ist vorteilhaft, wenn der Stopfen im in die Öffnung einzuführenden Bereich konisch ausgebildet ist.

Durch Nutzung des erfindungsgemäßen Roboterwerkzeugs und des entsprechenden Verfahrens muss kein Mensch eine für ihn ergonomisch ungünstige Bewegung verrichten. Die Kraftaufwendung zum Setzen der Stopfen erfolgt durch die Maschine. Durch den schnellen Setzvorgang müssen nicht mehr viele verschiedene Mitarbeiter mit dem Einsetzen der Stopfen beauftragt werden. Man spart Einarbeitungszeit und Planzeit, d.h. Zeit welche der Mitarbeiter bei jedem Fahrzeug mit dem Verbau beschäftigt ist. Das Einsetzen der Stopfen durch den Roboter geschieht schneller als bei Handarbeit wodurch Kosten einspart werden. Ferner setzt der Roboter die Stopfen unabhängig von deren Durchmesser immer an die richtige Stelle. Somit können Fehler vermindert und die Qualität des Setzens erhöht werden. Schließlich kommt der Mitarbeiter nicht mehr in Kontakt mit den scharfkantigen Öffnungen und kann sich daran auch nicht mehr verletzen.

Gegenüber den bisherigen roboterbasierten Werkzeugen ist es durch die Aneinanderreihung mehrerer Stopfen im Stopfenmagazin nicht mehr notwendig, nach jedem Einsetzvorgang einen neuen Stopfen aufzunehmen. Somit können Zeit und Kosten eingespart werden. Durch Verwendung des Spindelantriebs und den Wegfall des Druckluftvakuummechanismus werden zum einen Energie und Kosten gespart, zum anderen können auch die Druckluftschläuche entfallen. Dadurch verringern sich der Aufwand und das Unfallrisiko.

Durch die wechselbar gestaltete Setzeinrichtung kann das Roboterwerkzeug auf die jeweilige Anforderung bzw. den jeweiligen Durchmesser des Stopfens angepasst werden. Es ist somit universell einsetzbar.

Die Überprüfung des richtigen Sitzes des Stopfens am Ende des Setzvorgangs schließt Fehler beim Setzen bzw. einen falsch gesetzten Stopfen aus, wodurch die Qualität verbessert wird.

Der beispielsweise zu verwendende Spindelmotor (Schrittmotor) erlaubt einen exakten Vorschub bzw. ein exaktes Positionieren des Stopfens in der Setzeinrichtung bzw. an deren Auslass.

Alle oben beschriebenen Merkmale sind frei kombinierbar soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittansicht eines Teils eines Roboterwerkzeugs gemäß der Erfindung;
- Fig. 2: eine Detailansicht zu Figur 1.

Die Figuren sind beispielhaft schematisch. Gleiche Bezugszeichen benennen gleiche Teile in allen Ansichten.

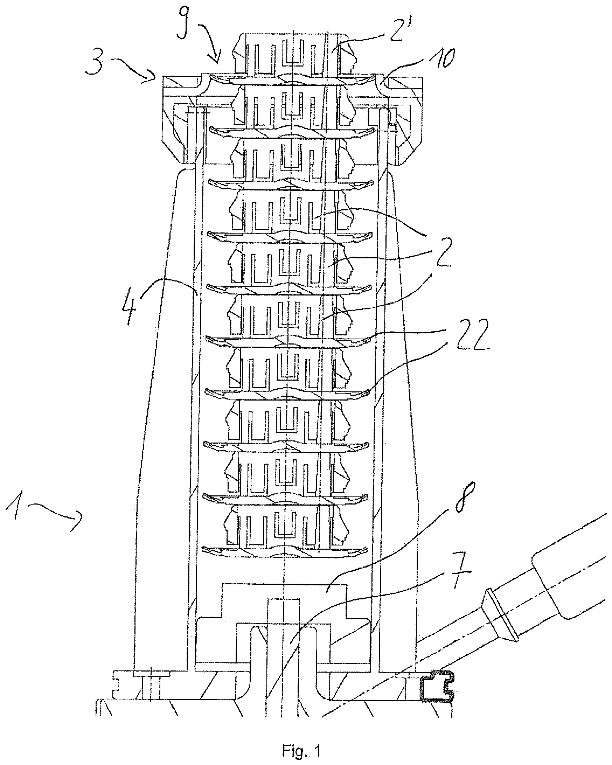

In Figur 1 ist ein Teil eines Roboterwerkzeugs 1 zum Setzen von Stopfen 2 in Öffnungen in einem Karosseriebauteil in einer Schnittansicht gezeigt. Das Roboterwerkzeug 1 umfasst eine Setzeinrichtung 3, an der ein Stopfenmagazin 4 mit einer Vielzahl von darin aufgereihten Stopfen 2 angeordnet ist. Die in dem Stopfenmagazin 4 aufgereihten Stopfen 2 werden über einen von einem Spindelantrieb 7 in Längsrichtung versetzbaren Schlitten 8 aus dem Auslass 9 in vordefinierten Schritten ausgeschoben, um eine exakte Positionierung der Stopfen 2 in der jeweiligen Öffnung zu gewährleisten. Die weiteren Bauteile des Spindelantriebs 7 sind nicht dargestellt. Das Roboterwerkzeug 1 ist MRK-gerecht und kann für einen teilautomatischen oder manuellen Betrieb entsprechende nicht dargestellte Aufnahmen zur menschlichen Führung aufweisen. Die Setzeinrichtung 3 weist an ihrem Auslass 9 die elastische umlaufende Lippe 10 auf, über die der nicht-elastische Deckel 22 des Stopfens 2 gehalten ist. Die Setzeinrichtung 3 ist wechselbar auf dem Stopfenmagazin 4 lösbar befestigt, beispielsweise aufgeschraubt.

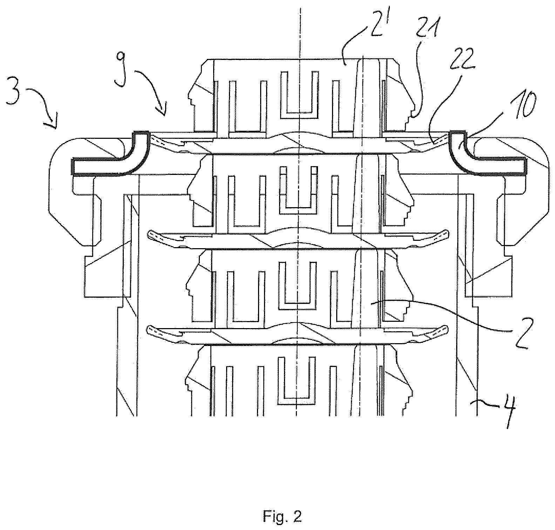

In Figur 2 ist eine Detailansicht einer an dem Stopfenmagazin 4 angeordneten Setzeinrichtung 3 eines Roboterwerkzeugs 1 gezeigt, bei der die elastische Lippe 10 durch den Deckel 22 des vordersten Stopfens 2' in axialer Richtung umgebogen ist. Im gezeigten Zustand wird gerade der vorderste Stopfen 2' aus dem Stopfenmagazin 4 ausgeschoben. Nach dem Austritt des Stopfens 2' klappt die elastische Lippe 10 zurück in eine waagerechte Position. Gegenüber dem axialen Außenrand der Setzeinrichtung 3 ist die elastische Lippe 10 beabstandet angeordnet.

Bei dem Verfahren zum Setzen des Stopfens 2 in die Öffnung in einem Karosseriebauteil wird über den Spindelantrieb 7 der Schlitten 8 in Längsrichtung versetzt, wodurch die Stopfen 2 nacheinander aus dem Stopfenmagazin 4 durch die Setzeinrichtung 3 ausgeschoben werden können. In einem über ein vorbestimmtes Maß aus dem Auslass 9 der Setzeinrichtung 3 herausgeschobenen Zustand wird der Stopfen 2 in die zu verschließende Öffnung eingesetzt, so dass der Hintergriffabschnitt 21 des Stopfens 2 die Öffnungswand hintergreift. Zum Einsetzen des Stopfens 2 wird die Setzeinrichtung 3 und die verbundenen Bauteile frei schwingend geschalten, so dass sich der Stopfen 2 über die schwingende Bewegung der Setzeinrichtung 3 selbständig mittig zur zu verschließenden Öffnung positioniert. Der Hintergriffabschnitt 21 des Stopfens 2 hintergreift somit sicher die Wand der Öffnung. Durch den Spindeltrieb 7 wird der Stopfen 2 schließlich vollständig aus dem Stopfenmagazin 4 herausgeschoben.

Zum Nachfüllen des Stopfenmagazins 4 kann dieses ausgetauscht oder mit der Setzeinrichtung 3 ein Stapel von Stopfen 2 überstülpt bzw. überfahren werden, wobei hier der Spindelantrieb 7 langsam analog zur Überstülpungsgeschwindigkeit des Roboters gegenläufig verfährt um ein falsches Orientieren des Stopfens 2 (Verdrehen um 180 Grad im Magazin) zu verhindern. Der Stapel an Stopfen 2 ist dabei vorzugsweise in einer Führung angeordnet. Die Lippe 10 ist hierfür nach innen biegbar.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, sofern sie der Definition des Roboterwerkzeugs, bzw. des Verfahrens, nach einem der folgenden Ansprüche entsprechen. Beispielsweise sind andere Stopfenaufbauten möglich, die an die entsprechenden Öffnungen und Wandstärken angepasst sind. Ferner kann die elastische Lippe aus verschiedenen Materialien hergestellt sein, solange eine ausreichende Halte- und Führungsfunktion sowie eine angemessene Kraft zur Umbiegung gewährleistet ist.

## Patentansprüche

1. Roboterwerkzeug zum Setzen von Stopfen (2) in Öffnungen in einem Karosseriebauteil mit einer Setzeinrichtung (3), an der ein Stopfenmagazin (4) mit einer Vielzahl von aufgereihten Stopfen (2) angeordnet ist, die mittels der Setzeinrichtung (3) nachladefrei unmittelbar nacheinander in die jeweiligen Öffnungen des Karosseriebauteils setzbar sind, wobei an einem Auslass der Setzeinrichtung (3) eine umlaufende elastische Lippe (10) vorgesehen ist, welche die Stopfen (2) in dem Stopfenmagazin (4) hält und durch eine axiale Bewegung der Stopfen (2) in axialer Richtung des Roboterwerkzeugs (1) elastisch umbiegbar ist, und wobei die elastische Lippe (10) an der Setzeinrichtung (3) zu einem axialen Außenrand (13) der Setzeinrichtung (3) axial beabstandet angeordnet ist.

2. Roboterwerkzeug nach Anspruch 1, **dadurch gekennzeichnet, dass** die Stopfen (2) jeweils einen nicht-elastischen Deckel (22) aufweisen, wobei der vorderste Stopfen (2') im Bereich der Setzeinrichtung (3) durch die elastische Lippe (10) an dem Deckel (22) gehalten ist.

3. Roboterwerkzeug nach dem vorigen Anspruch, **dadurch gekennzeichnet, dass** die elastische Lippe (10) an dem jeweiligen Deckel (22) des vordersten Stopfens (2') anliegt und im Zuge einer Ausschiebebewegung des Stopfens (2') als Führung für den Stopfen (2') dient und durch den Deckel (22) umbiegbar ist.

4. Roboterwerkzeug nach zumindest einem der vorigen Ansprüche, **dadurch gekennzeichnet, dass** es MRK-gerecht und die Setzeinrichtung (3) nacheinander automatisiert an die Öffnungen führbar ist.

5. Roboterwerkzeug nach zumindest einem der vorigen Ansprüche, **dadurch gekennzeichnet, dass** die Stopfen (2) aus dem in der Setzeinrichtung (3) aufgenommenen Stopfenmagazin über einen elektrischen Spindelantrieb (7) in vordefinierten Schritten ausschiebbar sind.

6. Roboterwerkzeug nach zumindest einem der vorigen Ansprüche, **dadurch gekennzeichnet, dass** die Setzeinrichtung (3) auswechselbar ist, so dass unterschiedliche Stopfen (2) in entsprechend unterschiedliche Öffnungen setzbar sind.

7. Verfahren zum Setzen eines Stopfens in eine Öffnung in einem Karosseriebauteil unter Verwendung des Roboterwerkzeugs (1) nach dem Anspruch 5, **dadurch gekennzeichnet, dass** über den Spindelantrieb (7) der Setzeinrichtung (3) der zu setzende Stopfen (2) über ein vorbestimmtes Maß aus dem Auslass der Setzeinrichtung (3) herausgeschoben und der teilweise herausgeschobene Stopfen (2) mittels der Setzeinrichtung (3) automatisiert in die zu verschließende Öffnung eingesetzt wird, so dass ein Teil des Stopfens (2) die Öffnung haltend hintergreift, und der Stopfen (2) aus der Setzeinrichtung (3) ausgeschoben und die Setzeinrichtung (3) abgezogen wird, wobei die elastische Lippe (10) beim Ausschieben des Stopfens (2) umgebogen wird und nach dem Ausschieben des Stopfens (2) den nachfolgenden Stopfen des Stopfenmagazins (4) zurückhält.

8. Verfahren nach dem vorigen Anspruch, **dadurch gekennzeichnet, dass** zum Einsetzen des Stopfens (2) die Setzeinrichtung (3) frei schwingend geschalten wird, wobei sich der Stopfen (2) über die schwingende Bewegung der Setzeinrichtung (3) selbständig mittig zur zu verschließenden Öffnung positioniert.

## Claims

1. A robot tool for placing plugs (2) into openings in a vehicle body component, with a placement means (3) on which is arranged a plug magazine (4) with a large number of lined-up plugs (2), which plugs can be placed by means of the placement means (3) without reloading and directly in succession into the respective openings in the vehicle body component, wherein an encircling elastic lip (10) is provided on an outlet of the placement means (3), which lip holds the plugs (2) in the plug magazine (4) and by an axial movement of the plugs (2) can be bent over elastically in the axial direction of the robot tool (1), and wherein the elastic lip (10) is arranged on the placement means (3), axially spaced apart from an axial outer edge (13) of the placement means (3).

2. A robot tool according to Claim 1, **characterised in that** the plugs (2) in each case have a non-elastic cover (22), with the foremost plug (2') in the region of the placement means (3) being held on the cover (22) by the elastic lip (10).

3. A robot tool according to the preceding claim, **characterised in that** the elastic lip (10) bears on the respective cover (22) of the foremost plug (2') and in the course of a pushing-out movement of the plug (2') serves as a guide for the plug (2') and can be bent over by the cover (22).

4. A robot tool according to at least one of the preceding claims, **characterised in that** it is suitable for HRC and the placement means (3) can be guided to the openings in succession in automated manner.

5. A robot tool according to at least one of the preceding claims, **characterised in that** the plugs (2) can be pushed out of the plug magazine, which is accommodated in the placement means (3), in predefined steps by way of an electric spindle drive (7).

6. A robot tool according to at least one of the preceding claims, **characterised in that** the placement means (3) is exchangeable, so that different plugs (2) can be placed into correspondingly different openings.

7. A method for placing a plug into an opening in a vehicle body component using the robot tool (1) according to Claim 5, **characterised in that**, by way of the spindle drive (7) of the placement means (3), the plug (2) which is to be placed is pushed out of the outlet of the placement means (3) by a predetermined amount, and the partially pushed-out plug (2) by means of the placement means (3) is inserted in automated manner into the opening which is to be closed, so that part of the plug (2) engages in holding manner in the opening from behind, and the plug (2) is pushed out of the placement means (3) and the placement means (3) is withdrawn, with the elastic lip (10) being bent over upon the plug (2) being pushed out, and once the plug (2) has been pushed out retaining the following plug of the plug magazine (4).

8. A method according to the preceding claim, **characterised in that** in order to insert the plug (2) the placement means (3) is switched to oscillate freely, with the plug (2) by way of the oscillating movement of the placement means (3) being positioned independently centrally to the opening which is to be closed.

## Revendications

1. Outil robotisé permettant la mise en place de bouchons (2) dans des ouvertures d'un composant de carrosserie, comprenant un dispositif de pose (3) sur lequel est installé un magasin de bouchons (4) renfermant un ensemble de bouchons (2) alignés qui peuvent être successivement directement mis en place sans rechargement au moyen du dispositif de pose (3) dans les ouvertures respectives du composant de carrosserie, sur la sortie du dispositif de pose (3) étant prévue une lèvre élastique périphérique (10) qui maintient les bouchons (2) dans le magasin de bouchons (4) et peut être élastiquement cintrée par un déplacement axial des bouchons (2) dans la direction axiale de l'outil robotisé (1), et la lèvre élastique (10) étant positionnée sur le dispositif de pose (3) en étant située à distance axiale du bord axial externe (13) de ce dispositif de pose (3).

2. Outil robotisé conforme à la revendication 1,
**caractérisé en ce que**
les bouchons (2) comportent chacun un capot non élastique (22), le bouchon (2') situé le plus en avant étant maintenu sur le capot (22) par la lèvre élastique (10) dans la zone du dispositif de pose (3).

3. Outil robotisé conforme à la revendication précédente,
**caractérisé en ce que**
la lèvre élastique (10) s'applique sur le capot (22) du bouchon (2') situé le plus en avant, et au cours d'un mouvement d'extraction de ce bouchon (2') permet son guidage en pouvant être cintrée par le capot (22).

4. Outil robotisé conforme à au moins l'une des revendications précédentes,
**caractérisé en ce qu'**
il est conforme à MRK et le dispositif de pose (3) peut être successivement et automatiquement guidé vers les ouvertures.

5. Outil robotisé conforme à au moins l'une des revendications précédentes,
**caractérisé en ce que**
les bouchons (2) peuvent être extraits du magasin de bouchons logé dans le dispositif de pose (3) par l'intermédiaire d'un entraînement à broche électrique (7) selon des étapes prédéfinies.

6. Outil robotisé conforme à au moins l'une des revendications précédentes,
**caractérisé en ce que**
le dispositif de pose (3) est interchangeable de sorte que différents bouchons (2) puissent être mis en place dans des ouvertures différentes correspondantes.

7. Procédé de mise en place d'un bouchon dans une ouverture d'un composant de carrosserie en utilisant un outil robotisé (1) conforme à la revendication 5,
**caractérisé en ce que**
par l'intermédiaire de l'entraînement à broche (7) du dispositif de pose (3) le bouchon (2) à poser est extrait dans une mesure prédéfinie de la sortie du dispositif de pose (3), le bouchon (2) partiellement extrait est posé automatiquement au moyen du dispositif de pose (3) dans l'ouverture à fermer de sorte qu'une partie du bouchon (2), vienne en prise par l'arrière en étant maintenu dans l'ouverture, le bouchon (2) est extrait du dispositif de pose (3) et le dispositif de pose (3) est retiré, la lèvre élastique (10) étant cintrée lors de l'extraction du bouchon (2), et retenant le bouchon suivant dans le magasin de bouchons (4) après l'extraction de ce bouchon (2).

8. Procédé conforme à la revendication précédente,
**caractérisé en ce que**
pour permettre de poser le bouchon (2) le dispositif de pose (3) est commuté librement oscillant, le bouchon (2) se positionnant automatiquement au milieu de l'ouverture à fermer du fait du mouvement oscillant du dispositif de pose (3).
